# EUROPÄISCHE PATENTSCHRIFT

(11) **EP 3 173 218 B1**
(45) Veröffentlichungstag und Bekanntmachung des Hinweises auf die Patenterteilung: **11.11.2020**
(21) Anmeldenummer: 15196015.0
(22) Anmeldetag: 24.11.2015
(51) Int. Cl.: B29C 70/38

(54) **VORRICHTUNG UND VERFAHREN ZUM HERSTELLEN EINES FASERVERBUNDBAUTEILS**
DEVICE AND METHOD FOR PRODUCING A FIBRE COMPOUND PRODUCT
DISPOSITIF ET PROCÉDÉ DE FABRICATION D'UN COMPOSANT EN FIBRES COMPOSITES

(43) Veröffentlichungstag der Anmeldung: 31.05.2017
(73) Patentinhaber: Airbus Defence and Space GmbH, 82024 Taufkirchen (DE)
(72) Erfinder: Engel, Franz, 81539 München (DE); Weimer, Christian, 81539 München (DE); Orth, Tilman, 80469 München (DE)
(74) Vertreter: Krebs, Jörg

(56) Entgegenhaltungen:
- DE-A1-102010 039 955
- US-A1- 2009 205 767
- US-A1- 2010 193 103
- US-A1- 2010 252 182

## Beschreibung

Die vorliegende Erfindung betrifft eine Vorrichtung und ein Verfahren zum Herstellen eines Faserverbundbauteils.

Obwohl auf beliebige Faserverbundwerkstoffe und beliebige Bauteile anwendbar, werden die vorliegende Erfindung sowie die ihr zugrunde liegende Problematik in Bezug auf Carbon-Faser verstärkte Kunststoffe (CFK) und große Bauteile, beispielsweise Rumpfteile eines Luft- oder Raumfahrzeugs, näher erläutert.

Bisweilen werden große CFK-Bauteile zumeist mit der sogenannten Automated Fiber Placement (AFP) Technologie gefertigt. Dazu ist eine sehr groß dimensionierte Systemtechnik notwendig. Es handelt sich meist um einen an einem Portal aufgehängt laufenden Ablegeroboter, einem sogenannten Fiberplacement-Kopf oder Tapelege-Kopf, der Fasern auf einem formgebenden Werkzeug, beispielsweise der Negativform eines Rumpfabschnitts eines Luft- oder Raumfahrzeugs, ablegt.

Ein von derartigen Anlagen abweichender Ansatz einer Faser-Legevorrichtung ist in der DE 20 2011 110 519 U1 beschrieben. Dabei ist ein Schienensystem mit einer Vielzahl von Schienen und mehreren Ablegerobotern vorgesehen, welche auf dem Schienensystem entlang der Schienen bewegbar sind. Die Ablegeroboter und das Schienensystem werden mittels eines zentralen Leitrechners gesteuert.

Die US 2009/0205767 beschreibt ein Verfahren zur Herstellung eines Verbundbauteils durch Aufbringung eines partiellen Vakuums zwischen einem Lagenmaterial und einer Form und Vorrücken des partiellen Vakuums und des Lagenmaterials entlang der Form.

Die US 2010/0193103 A1 beschreibt das Auflegen eines Verbundlaminats durch Aufbringen unterschiedlich konfigurierter Reihen von Verbundbändern über verschiedene Sektoren einer Werkzeugoberfläche unter Verwendung einer Vielzahl von unabhängig gesteuerten Bandaufbringfahrzeugen.

Es ist Aufgabe der vorliegenden Erfindung eine verbesserte Vorrichtung und ein verbessertes Verfahren zum Herstellen eines Faserverbundbauteils bereitzustellen. Erfindungsgemäß wird diese Aufgabe durch eine Vorrichtung mit den Merkmalen des Patentanspruchs 1 und/oder durch ein Verfahren mit den Merkmalen des Patentanspruchs 4 gelöst.

Demgemäß ist eine Vorrichtung zum Herstellen eines Faserverbundbauteils nach Anspruch 1 sowie ein Verfahren zum Herstellen eines Faserverbundbauteils nach Anspruch 4 vorgesehen.

Die der vorliegenden Erfindung zugrunde liegende Idee besteht darin, eine Mehrzahl von Ablegeeinheiten bereitzustellen, wobei jede der Ablegeeinheiten eine eigene Steuereinrichtung aufweist und wobei die Ablegeeinheiten ausgelegt sind, die Faserablage untereinander zu koordinieren bzw. aufeinander abzustimmen. Somit werden zumindest teilweise autonome Ablegeeinheiten bereitgestellt, welche vorgesehen sind, das Fasermaterial auf flexible Weise automatisiert abzulegen.

Daher werden die üblicherweise sehr großen und kostenintensiven AFP-Anlagen mit einer Mehrzahl kostengünstiger und flexibel einsatzbarer Ablegeeinheiten ersetzt. Dies senkt die Investitionskosten in die Systemtechnik und ermöglicht mehr potentielle Einsatzgebiete.

Ferner sind keine Führungsschienen oder anders gestaltete Führungseinrichtungen notwendig, da die Ablegeeinheiten aufgrund ihrer eigenen Steuereinrichtung in der Lage sind, sich ohne eine Führung in einer mit den anderen Ablegeeinheiten abgestimmten Weise zu bewegen.

Ferner können aufgrund der hohen Flexibilität der Ablegeeinheiten komplexe Strukturen, beispielsweise bionische Strukturen, und/oder komplexe Bauteile abgebildet werden.

Darüber hinaus wird gegenüber herkömmlichen AFP-Anlagen maßgeblich die Ausfallsicherheit erhöht, da die Mehrzahl von Ablegeeinheiten gleichzeitig eingesetzt werden kann und bei Ausfall einer einzelnen Ablegeeinheit die restlichen Ablegeeinheiten nach wie vor funktionieren und die ausgefallene Ablegeeinheit in ihrer Funktion ersetzen können.

Als besonderer Vorteil erlauben es die mit ihrer eigenen Steuereinrichtung steuerbaren und mechanisch unabhängigen Ablegeeinheiten ferner, Bauteile beliebiger Größe zu produzieren. Die Systemtechnik führt hier zu keinerlei Beschränkung der Bauteilgröße. Es wird lediglich ein entsprechendes formgebendes Werkzeug benötigt.

Unter mechanisch voneinander unabhängigen Ablegeeinheiten ist zu verstehen, dass die Ablegeeinheiten einander keinerlei mechanische Randbedingungen vorgeben.

Unter einem Ansteuern zum automatischen Zusammenwirken mit zumindest einer weiteren Ablegeeinheit zum gemeinsamen Ablegen einer vorbestimmten Faseranordnung ist zu verstehen, dass die Ablegeeinheiten sich über deren Steuereinrichtungen miteinander koordinieren, um die vorbestimmte Faseranordnung herzustellen. Die Steuereinrichtungen der einzelnen Ablegeeinheiten stehen dazu insbesondere in Kommunikationsverbindung miteinander.

Ein Ablegen von Fasermaterial kann mit oder ohne eine Vorspannung des Fasermaterials erfolgen. Ferner kann es sich bei dem Ablegen um ein Auflegen des Fasermaterials auf eine Oberfläche des Werkzeugs oder um ein Umwickeln oder ein Umflechten eines formgebenden Werkzeugs (in diesem Falls eines Kerns) handeln.

In den Unteransprüchen finden sich vorteilhafte Ausgestaltungen und Verbesserungen der Erfindung.

Gemäß einer bevorzugten Weiterbildung sind die Ablegeeinheiten jeweils zur autonomen Fortbewegung auf einer zugeordneten Lauffläche ausgebildet. Insbesondere weisen die Ablegeeinheiten jeweils eine zur autonomen Fortbewegung ausgelegte Sensorik und Antriebseinrichtung auf. Die Steuereinrichtung steuert die Antriebseinrichtung, um die vorbestimmte Faseranordnung herzustellen, wobei von der Sensorik erfasste Umgebungsdaten, bei der Ansteuerung der Antriebseinichtung mit berücksichtigt werden. Beispielsweise kann bei einer Fortbewegung von der Sensorik erfassten Hindernissen oder anderen Ablegeeinheiten ausgewichen werden. Die Lauffläche kann durch das Werkzeug ausgebildet oder mit dem Werkzeug verbunden oder separat von dem Werkzeug vorgesehen sein. Vorteilhaft ist somit trotz großer Flexibilität ein hoher Automatisierungsgrad bereitgestellt.

Gemäß einer Ausführungsform weisen die Ablegeeinheiten jeweils Kommunikationsmittel auf, welche zur Kommunikation der Ablegeeinheiten untereinander zur Abstimmung des Ablegens der Faseranordnung, insbesondere des Musters oder der Aufteilung der Faseranordnung, ausgelegt sind. Vorteilhaft können die Ablegeeinheiten somit flexibel und/oder autonom zum gemeinsamen Ablegen der vorbestimmten Faseranordnung miteinander zusammenwirken. Beispielsweise kann es sich bei den Kommunikationsmitteln um Einrichtungen für eine daten-übertragende Funkverbindung, beispielsweise drahtlose Netzwerk (WLAN-) Module zum Herstellen einer Netzwerkverbindung, handeln.

Ein Hohlkörper ist als Lauffläche vorgesehen, dessen Innenseite die Lauffläche ausbildet. Das Werkzeug ist zumindest abschnittsweise innerhalb des Hohlkörpers derart anordenbar, dass es mittels sich auf der Lauffläche fortbewegender Ablegeeinheiten mit dem Fasermaterial umwickelbar oder umflechtbar ist. Somit ist in diesem Fall das Ablegen einer vorbestimmten Faseranordnung als ein Umwickeln oder Umflechten des Werkzeugs mit einer vorbestimmten Faseranordnung vorgesehen.

Die Lauffläche kann ferromagnetisch ausgebildet sein. Die Ablegeeinheiten weisen in diesem Fall jeweils eine Antriebseinrichtung mit mittels der Steuereinrichtung steuerbaren Magneten zur magnetisch angetriebenen Fortbewegung auf der Lauffläche auf. Unter einer ferromagnetischen Ausbildung der Lauffläche ist zu verstehen, dass die Lauffläche in einem zur Fortbewegung der Antriebseinrichtung ausreichenden Maße ferromagnetisches Material enthält. Die Lauffläche kann, muss dazu aber nicht ausschließlich aus ferromagnetischem Material bestehen. Besonders vorteilhaft sind so oftmals von herkömmlichen AFP-Verfahren bestehende formgebende Werkzeuge als erfindungsgemäße Lauffläche verwendbar, da diese oftmals aus ferromagnetischen Materialien hergestellt sind oder ferromagnetische Materialien enthalten. Der Hohlkörper ist als ferromagnetischer Hohlkörper, beispielsweise Ring, Hohlzylinder, oder andersartig geformter Hohlkörper, gebildet.

Alternativ oder zusätzlich enthält die Lauffläche steuerbare Magnete. Die steuerbaren Magnete sind vorzugsweise mittels der Steuereinrichtung der Ablegeeinheiten steuerbar vorgesehen. In diesem Fall weisen die Ablegeeinheiten eine mit den steuerbaren Magneten zusammenwirkende Antriebseinrichtung zur magnetisch angetriebenen Fortbewegung auf der Lauffläche auf. Die Antriebseinrichtung kann in diesem Fall ebenfalls ein steuerbares oder permanentes mit den steuerbaren Magneten der Lauffläche zusammenwirkendes Magnetfeld bereitstellend und/oder ferromagnetisch ausgebildet sein.

Bei dem erfindungsgemäßen Verfahren zur Herstellung eines Faserverbundbauteils bewegen sich die Ablegeeinheiten zum Ablegen des Fasermaterials jeweils auf einer zugeordneten Lauffläche fort. Insbesondere bewegen sie sich auf der Lauffläche autonom fort. Dies kann beispielsweise durch Umgebungserfassung mittels einer integrierten Sensorik, Steuerung mittels einer integrierten Steuereinrichtung und Antrieb mittels einer integrierten Antriebseinrichtung realisiert sein. Vorteilhaft ist somit die Fortbewegung der Ablegeeinheiten automatisiert und dennoch sehr flexibel einsetzbar.

Die Ablegeeinheiten bewegen sich auf einer als Lauffläche ausgebildeten Innenseite eines Hohlkörpers zum Ablegen des Fasermaterials fort.

Das Werkzeug wird dabei innerhalb des Hohlkörpers derart angeordnet, dass die sich auf der Lauffläche fortbewegende Ablegeeinheiten das Werkzeug mit dem Fasermaterial umwickeln oder umflechten. Mittels Umwickeln oder Umflechten eines Werkzeugs können vorteilhaft komplexe Geometrien abgebildet werden. Das Werkzeug kann in diesem Fall auch als Kern, gegebenenfalls auch als verlorener Kern, ausgebildet sein. Dies ist bei gleichzeitig hoher Flexibilität der Art und Weise der Faserablage, beispielsweise mit unterschiedlichsten Wickel- oder Flechtmustern, und insbesondere auch mit unterschiedlich geformten und/oder unterschiedlich großen Hohlkörpern möglich. Ferner kann das Werkzeug (bzw. der Kern) während des Ablegens, insbesondere stetig, durch den Hohlkörper hindurchgeführt werden. Somit kann der Hohlkörper mit vergleichsweise geringer Tiefe ausgebildet sein, wobei dennoch auch sehr lange Faserverbundbauteile gefertigt werden können.

Die Ablegeeinheiten bewegen sich zum Ablegen des Fasermaterials magnetisch angetrieben auf der Lauffläche fort. Die Ablegeeinheiten können dazu in einer definierten Weise magnetisch an der Lauffläche gehalten werden und/oder entlang der Lauffläche in vorbestimmter Weise fortbewegt werden. Vorteilhaft werden somit magnetische oder ferromagnetische Eigenschaften der Lauffläche zur Fortbewegung der Ablegeeinheiten genutzt. Ferner wird aufgrund dessen, dass die Ablegeeinheit keine Antriebskraft über Reibschluss auf die Lauffläche übertragen müssen, insbesondere im Falle eines als Lauffläche ausgebildeten Werkzeugs, vermieden, dass bereits abgelegte Fasern aufgrund einer Antriebskraft verrutschen. Stattdessen rollt die magnetisch angetriebene Ablegeeinheit über etwaige bereits abgelegte Fasern hinweg, ohne dass dabei eine Antriebskraft reibschlüssig übertragen wird.

Die Lauffläche kann ferromagnetisch ausgebildet vorgesehen sein. Ferner weisen die Ablegeeinheiten jeweils eine Antriebseinrichtung mit steuerbaren Magneten zur magnetisch angetriebenen Fortbewegung auf der Lauffläche auf, wobei die Magnete zur Fortbewegung der Ablegeeinheit auf der Lauffläche jeweils mittels der jeder Ablegeeinheiten eigenen Steuereinrichtung angesteuert werden. Vorteilhaft können dabei auch bestehende ferromagnetische Werkzeuge als Lauffläche verwendet werden. Alternativ oder zusätzlich können geeignete Laufflächen einfach und kostengünstig hergestellt werden.

Alternativ oder zusätzlich enthält die Lauffläche steuerbare Magnete. Die Ablegeeinheiten weisen jeweils eine damit zusammenwirkende Antriebseinrichtung zur magnetisch angetriebenen Fortbewegung auf der Lauffläche auf. Die Magnete werden zur Fortbewegung der einzelnen Ablegeeinheiten auf der Lauffläche mittels einer Steuereinrichtung angesteuert. Beispielsweise wird dabei durch magnetische Anziehung eine bewegliche Masse der Antriebseinrichtung, beispielsweise ein bewegliches Pendel, innerhalb eines Gehäuses der Ablegeeinheit aus eine Ruheposition verlagert, sodass das Gehäuse entsprechend der Verlagerung rollt oder kippt. Vorzugsweise erfolgt die entsprechende Ansteuerung der steuerbaren Magnete der Lauffläche an der zur Fortbewegung geeigneten Stelle mittels der jeder Ablegeeinheit eigenen Steuereinrichtung.

Die obigen Ausgestaltungen und Weiterbildungen lassen sich, sofern sinnvoll, beliebig miteinander kombinieren. Insbesondere sind sämtliche Merkmale der Vorrichtung zum Herstellen eines Faserverbundbauteils auf das Verfahren zur Herstellung des Faserverbundbauteils übertragbar, und umgekehrt.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird im Folgenden anhand von Ausführungsbeispielen unter Bezugnahme auf die beiliegenden Figuren der Zeichnung näher erläutert. Die Elemente der Zeichnungen sind nicht notwendigerweise maßstabsgetreu zueinander gezeigt. Von den Figuren zeigen:
- Fig. 1: eine schematisch dargestellte Draufsicht auf eine Vorrichtung zur Herstellung eines Faserverbundbauteils;
- Fig. 2A: eine schematisch dargestellte Vorderansicht einer Vorrichtung zur Herstellung eines Faserverbundbauteils gemäß einer erfindungsgemäßen Ausführungsform;
- Fig. 2B: eine schematisch dargestellte Seitenansicht einer Vorrichtung zur Herstellung eines Faserverbundbauteils gemäß einer weiteren erfindungsgemäßen Ausführungsform;
- Fig. 3A, 3B: Die Vorrichtung zur Herstellung eines Faserverbundbauteils mit einer ersten Abwandlung;
- Fig. 4A, 4B: Die Vorrichtung gemäß Fig. 3A, 3B mit einer weiteren Abwandlung;
- Fig. 5: eine schematische Schnittansicht einer Ausführungsform einer Vorrichtung zur Herstellung eines Faserverbundbauteils; und
- Fig. 6: eine schematische Schnittansicht einer weiteren Ausführungsform einer Vorrichtung zur Herstellung eines Faserverbundbauteils.

In den Figuren bezeichnen dieselben Bezugszeichen gleiche oder funktionsgleiche Komponenten, soweit nichts Gegenteiliges angegeben ist.

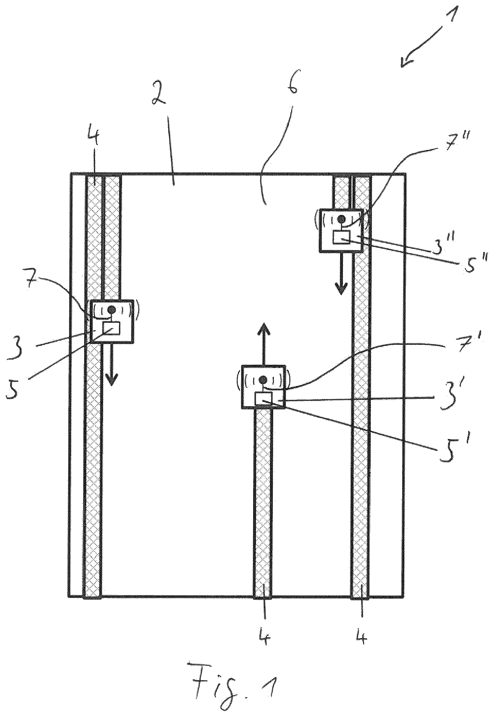

Fig. 1 zeigt eine schematisch dargestellte Draufsicht auf eine Vorrichtung 1 zur Herstellung eines Faserverbundbauteils.

Die Vorrichtung 1 weist ein formgebendes Werkzeug 2 sowie eine Mehrzahl von Ablegeeinheiten 3, 3', 3" auf. Das Werkzeug 2 ist als eine Lauffläche 6 für die Ablegeeinheiten 3, 3', 3" ausgebildet.

Die Ablegeeinheiten 3, 3', 3" sind jeweils zum Ablegen eines Fasermaterials 4 auf dem formgebenden Werkzeug 2 ausgebildet. Sie weisen jeweils eine Steuereinrichtung 5, 5', 5" auf, welche ausgelegt ist, die jeweilige Ablegeeinheit 3; 3'; 3" zum automatischen Zusammenwirken mit den weiteren Ablegeeinheiten 3, 3', 3" zu einem gemeinsamen Ablegen einer vorbestimmten Faseranordnung anzusteuern.

Dargestellt sind die Ablegeeinheiten 3, 3', 3" während des Ablegens des Fasermaterials 4, wobei rein beispielhaft eine Anzahl von drei Ablegeeinheiten 3, 3', 3" dargestellt ist. Es kann sich anstatt dreier um eine beliebige andere Mehrzahl von Ablegeeinheiten 3, 3', (...), 3ⁿ handeln.

Die Ablegeeinheiten 3, 3', 3" sind jeweils zur autonomen Fortbewegung auf der Lauffläche 6 ausgebildet. Sie weisen dementsprechende nicht im einzelnen dargestellte Sensoren und eine Antriebseinrichtung auf, welche mit der Steuereinrichtung 5, 5', 5" zur autonomen Fortbewegung zusammenwirken. Die Sensoren erfassen bereits mit Fasermaterial 4 belegte Bereiche, Randbereiche des Werkzeugs 2 sowie weitere Ablegeeinheiten. Ferner weisen die Ablegeeinheiten 3, 3', 3" jeweils Kommunikationsmittel 7, 7', 7" auf, welche zur Kommunikation der Ablegeeinheiten 3, 3', 3" untereinander vorgesehen sind. Somit kann eine Abstimmung des Musters oder der Aufteilung der Faseranordnung zum Ablegen derselben unter den Ablegeeinheiten 3, 3', 3" flexibel erfolgen.

Eine Ablegeeinheit wird stets derart durch die Steuereinrichtung 5, 5'; 5" angesteuert, dass ein nächstliegender Abschnitt des Werkzeugs 2, welcher mit einer Faserlage des Fasermaterials 4 zu belegen ist, in einer geometrisch einfach zu erfassen Weise, insbesondere einer geraden Linie, belegt wird.

Durch die Kommunikationsmittel 7, 7', 7" werden Informationen über bereits belegte Abschnitte unter den Ablegeeinheiten geteilt. Somit kreuzen sich die Fortbewegungsbahnen der Ablegeeinheiten nur, falls dies für das abzulegende Muster der Faseranordnung gewünscht ist oder falls sich eine Ablageeinheit zu einem neuen Startpunkt bewegt.

Bei Erreichen eines Randes oder einer Begrenzung des Werkzeugs 2 oder eines bereits mit Fasermaterial 4 in der gewünschten Weise belegten Abschnitts ändert die Ablegeeinheit 3; 3'; 3" von der Steuereinrichtung angesteuert ihre Fortbewegungsrichtung. Beispielsweise dreht die Ablageeinheit mit einem Versatz einer Breite einer Faserlage bzw. einer Legebahn des Fasermaterials 4 um und legt bei einer Fortbewegung in entgegengesetzter Richtung an die zuvor gelegte Legebahn angrenzend eine weitere Faserlage ab. Sind angrenzend keine freien Abschnitte des Werkzeugs vorhanden, bewegt sich die Ablegeeinheit zu einem neuen Startpunkt, welcher noch nicht mit einer gewünschten Faserlage belegt ist. Der Startpunkt wird vorzugsweise anhand der von den anderen Ablegeeinheiten übermittelten Informationen an einer Stelle des Werkezeugs gewählt, an welcher noch keine Ablage in gewünschter Weise erfolgt ist.

Dieses Vorgehen wird, insbesondere in autonomer Weise, solange weitergeführt, bis keine freien Abschnitte des Werkzeugs 2 mehr vorhanden sind, an welchen die vorbestimmte Faseranordnung eine Ablage vorsieht. Somit wird das komplette formgebende Werkzeug 2 mit Fasermaterial 4 belegt.

Das Fasermaterial kann dabei von den Ablegeeinheiten 3, 3', 3" in einem Vorratsabschnitt mitgeführt werden oder über eine externe Zuführung zugeführt werden.

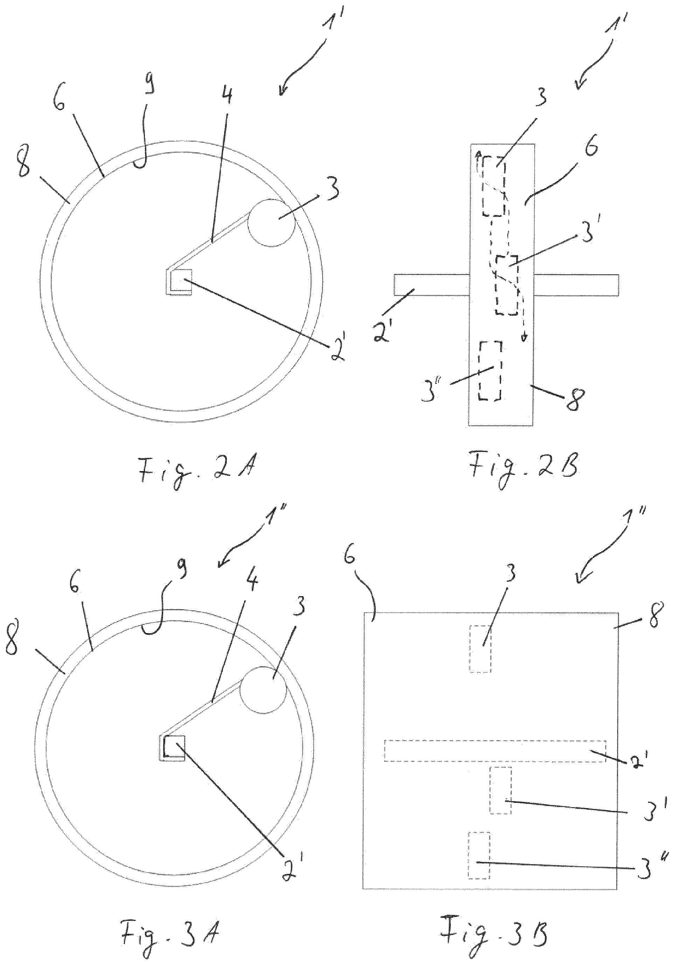

Fig. 2A zeigt eine schematisch dargestellte Vorderansicht einer Vorrichtung 1' zur Herstellung eines Faserverbundbauteils gemäß einer erfindungsgemäßen Ausführungsform.

Bei dieser Ausführungsform ist im Unterschied zu Fig. 1 ein Hohlkörper 8 als Lauffläche 6 vorgesehen, dessen Innenseite 9 die Lauffläche 6 bildet. Das formgebende Werkzeug 2' ist hier von der Lauffläche 6 beabstandet und zumindest abschnittsweise innerhalb des Hohlkörpers 8 angeordnet. Die Ablegeeinheiten 3, 3', 3" bewegen sich auf der Lauffläche und umwickeln oder umflechten dabei das Werkzeug 2', wodurch eine Faserablage auf dem Werkzeug 2' erfolgt.

Fig. 2B zeigt eine schematisch dargestellte Seitenansicht einer Vorrichtung zur Herstellung eines Faserverbundbauteils gemäß einer weiteren erfindungsgemäßen Ausführungsform.

Eine beispielhafte Fortbewegungsbahn der Ablegeeinheiten 3, 3', 3" ist mit gestrichelt Pfeilen angedeutet.

Das Umflechten oder Umwickeln des Werkzeugs 2' erfolgt in einer vorbestimmten Weise. Beispielsweise können sich die Bahnen der Fortbewegung der Ablegeeinheiten 3, 3', 3" beim Umrunden des Werkzeugs 2' regelmäßig in der Art eines Maitanz-Musters kreuzen, sodass ein typisches Flechtenmuster des Fasermaterials 4 auf dem Werkzeug 2' erzeugt wird. Auch andere, insbesondere auch komplexere, Flechtmuster sind bei entsprechend angepasster Fortbewegung herstellbar.

In der dargestellten Ausführungsform wird das Werkzeug, welches eine Länge aufweist, die größer als die Tiefe des Hohlkörpers 8 bzw. die Breite der Lauffläche 6 ist, während dem Umflechten durch den Hohlkörper 8 hindurchgeführt. Das Durchführen wird, insbesondere kontinuierlich, vorgenommen.

Die Fig. 3A, 3B zeigen die Vorrichtung zur Herstellung eines Faserverbundbauteils mit einer ersten Abwandlung.

Im Unterschied zur Ausführungsform gemäß Fig. 2 A und 2 B weist die Lauffläche 6 hier eine Breite bzw. der Hohlkörper eine Tiefe auf, die größer als die Länge des Werkzeugs 2' ausgebildet ist. Hier kann das Werkzeug 2' daher stationär innerhalb des Hohlkörpers angeordnet sein, wobei die Ablegeeinheiten 3, 3', 3" sich auch axial entlang des Hohlkörpers fortbewegen und so das Werkzeug 2' vollständig umwickeln oder umflechten können.

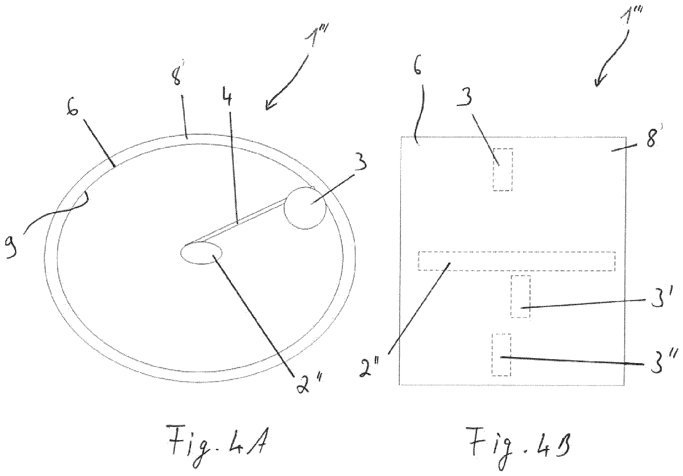

Die Fig. 4A, 4B zeigen die Vorrichtung gemäß Fig. 3A, 3B mit einer weiteren Abwandlung.

Bei dieser Abwandlung ist exemplarisch eine komplexere Form eines Werkzeugs 2" dargestellt. Der Hohlkörper 8' weist eine zu der Form des Werkzeugs 2" passende Form auf. Sich verändernde Abstände des Werkzeugs 2" zu einer Mittelachse werden dabei an dem Hohlkörper 8 ebenenfalls verändert und so ausgeglichen. In der dargestellten rein beispielhaften Ausführung handelt es sich um eine im Querschnitt elliptische Form des Werkzeugs 2" und des Hohlkörpers 8.

Anstatt oder zusätzlich zu einer elliptischen Form sind auch jegliche andere Arten komplexer Formen denkbar. Beispielsweise könnten das Werkzeug 2" und dementsprechend auch der Hohlkörper 8' sich in ihrer Längsrichtung verjüngen, insbesondere kalottenförmig ausgebildet sein. Ferner könnten das Werkzeug 2" und der Hohlkörper 8' auch einer anderen sich in Quer- und Höhenrichtung verändernden Form folgen.

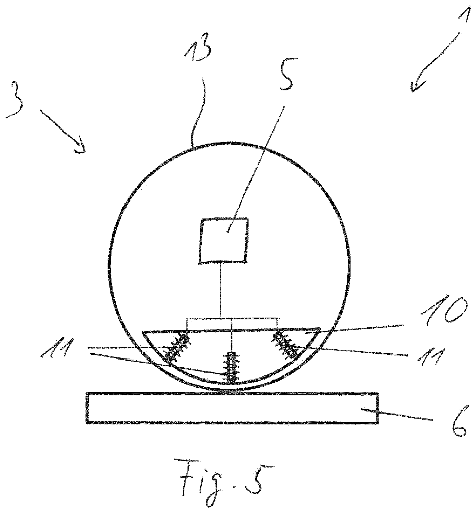

Fig. 5 zeigt eine schematische Schnittansicht einer Ausführungsform einer Vorrichtung 1 zur Herstellung eines Faserverbundbauteils. Es kann sich dabei um eine gemäß jeder der Fig. 1 bis 4B ausgebildete Vorrichtung 1; 1'; 1"; 1"'handeln.

Bei dieser Ausführungsform ist die Lauffläche 6 ferromagnetisch ausgebildet. Die Ablegeeinheit 3 weist ein kugelförmiges Gehäuse 13 auf. Alternativ zu einem kugelförmigen Gehäuse kann das Gehäuse auch als ein zylinderförmiges, insbesondere kreiszylinderförmiges, Gehäuse ausgebildet sein.

Innerhalb des Gehäuses 13 ist eine beweglich entlang der Innenwand des Gehäuses 13 laufende Antriebseinrichtung 10 vorgesehen. Die Antriebseinrichtung 10 ist als kugelabschnittsförmiges, in Umfangsrichtung des Gehäuses 13 bewegliches Pendel ausgebildet und weist in unterschiedliche radiale Richtungen wirkend ansteuerbare Magnete 11 auf. Im Fall eines kreiszylinderförmigen Gehäuses handelt es sich entsprechend um ein zylinderabschnittförmiges Pendel.

Wird die Antriebseinrichtung 10 durch ein Zusammenwirken der Magnete 11 mit der ferromagnetischen Lauffläche 6 hinsichtlich ihrer Ausrichtung relativ zum Gehäuse 13 verlagert, bringt dies auch das Gehäuse 13 dazu, in Richtung Antriebseinrichtung zu folgen bzw. zu rollen.

Die Magnete 11 werden zur Fortbewegung der Ableseeinheit 3 mittels der Steuereinrichtung 5 entsprechend angesteuert.

Alternativ zu einem frei beweglichen Pendel können an der Innenseite des Gehäuses 13 auch Führungseinrichtungen, beispielsweise ein Schienensystem oder dergleichen, zur Führung der Antriebseinrichtung 10 vorgesehen sein.

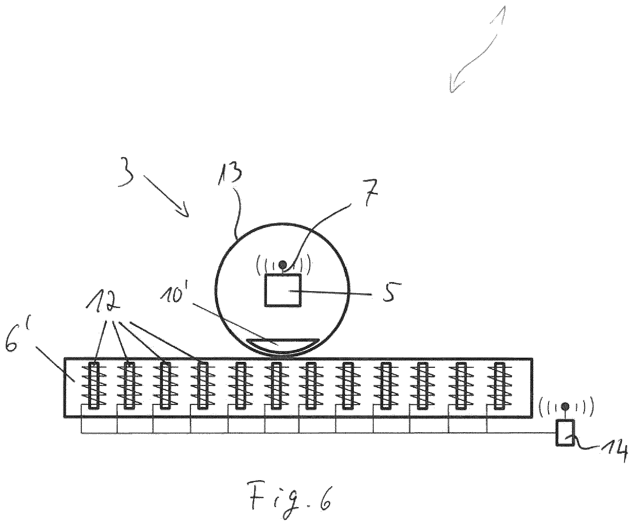

Fig. 6 zeigt eine schematische Schnittansicht einer weiteren Ausführungsform einer Vorrichtung zur Herstellung eines Faserverbundbauteils. Es kann sich dabei ebenfalls um eine gemäß jeder der Fig. 1 bis 4B ausgebildete Vorrichtung 1; 1'; 1"; 1"' handeln.

Bei dieser Ausführungsform weist die Lauffläche 6' eine Vielzahl von steuerbaren Magneten 12 auf. Die Ablegeeinheit 3 weist eine damit zusammenwirkende Antriebseinrichtung 10' auf, welche beispielhaft ebenfalls als freibewegliches entlang der Gehäuse Innenfläche bewegliches Pendel vorgesehen ist. Es handelt sich hier um ein ferromagnetisches Pendel.

Die steuerbaren Magnete 12 sind mit einer Empfangseinrichtung 14 gekoppelt, welche ausgebildet ist, Steuerbefehle der Steuereinrichtung 5 der Ablegeeinheit 3 an die einzelnen Magnete 12 weiterzugeben. Die Steuereinrichtung 5 ist mit Kommunikationsmitteln 7 der Ablegeeinheit 3 gekoppelt, so dass Steuersignale an die Empfangseinrichtung 14 gesendet werden können.

Somit ist die Steuereinrichtung 5 in der Lage, die steuerbaren Magnete 12 einzeln in zur Fortbewegung geeigneter Weise anzusteuern und dabei ein magnetisches Feld zur Anziehung der Antriebseinrichtung 10' zu erzeugen. Wird die Antriebseinrichtung 10' beispielsweise von einem seitlich davon angeordneten Magneten 12 angezogen, so wird sie relativ zum Gehäuse 13 der Ablegeeinheit 3 aus einer Ruhestellung ausgelenkt. Somit wird auch das Gehäuse 13 und damit die gesamte Ablegeeinheit dazu gebracht, in Richtung des das Magnetfeld momentan erzeugenden Magneten 12 zu folgen bzw. zu rollen.

Die Magnete 12 werden zur Fortbewegung der Ablegeeinheit 3 mittels der Steuereinrichtung 5 entsprechend angesteuert.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise handelt es sich bei der Antriebseinrichtung nicht notwendigerweise um ein Pendel. Alternativ oder zusätzlich zu einem Pendel können auch an einem innerhalb der Ablegeeinheit vorgesehenen Führungssystem bewegliche steuerbare Magnete vorgesehen sein.

Gemäß einer weiteren Ausführungsform kann eine in eine Außenhaut des Gehäuses 13 integrierte oder eine nahe an einer Außenhaut des Gehäuses 13 vorgesehene Schicht der Ablegeeinheit mittels einer Ansteuerung magnetisierbar ausgebildet sein. Insbesondere können ansteuerbare Elektromagnete in die Außenhaut der Ablegeeinheit integriert vorgesehen sein. Zur Fortbewegung der Ablegeeinheit wird das Magnetfeld durch eine entsprechende Ansteuerung in der gewünschten Fahrtrichtung entlang der Außenhaut bzw. magnetisierbaren Schicht verschoben.

Zusätzlich zu einem steuerbaren Magnetfeld kann auch ein ständig wirkendes oder statisches Magnetfeld zwischen der Ablegeeinheit 3 und der Lauffläche 6 vorgesehen sein. Damit kann die Ablegeeinheit 3 unabhängig von der Fortbewegung an der Lauffläche 6 gehalten werden, beispielsweise auch bei über Kopf arbeiten. Ferner kann so auch eine mittels der Ablegeeinheit 3 auf das Fasermaterial 4 aufgebrachte Kompaktierkraft auf einen vorbestimmten Wert eingestellt werden.

Gemäß einer Ausführungsform der Ablegeeinheit 3 ist ein Vorratsabschnitt zum Vorhalten eines Vorrats an Fasermaterial vorgesehen, welcher mit dem Gehäuse 13 gebildet ist. Insbesondere kann der Vorratsabschnitt zum Vorhalten eines Vorrats an Fasermaterial in Form einer Faserspule ausgebildet sein. Somit kann die Ablegeeinheit 3 vorteilhaft das Fasermaterial zur Ablage an einem vorbestimmten Ort mittransportieren, welches daher nicht von außen zugeführt werden braucht.

Gemäß einer weiteren Ausführungsform wird das Fasermaterial von außen über eine Zuführeinrichtung zugeführt, wobei die Ablegeeinheit 3 das Fasermaterial an dem vorbestimmten Ort ablegt. Auch bei dieser Ausführung kann ein Gehäuse 13 für die Aufnahme der anderen Komponenten der Ablegeeinheit vorgesehen sein.

Bei einer Ausführung ist eine Halterungseinrichtung vorgesehen, welche die Komponenten der Ablegeeinheit innerhalb des Gehäuses lagert. Die Halterungseinrichtung haltert bzw. lagert die Komponenten und richtet diese stets bedarfsgerecht aus. Die Halterungseinrichtung selbst kann fest oder beweglich innerhalb des Gehäuses 13 gelagert vorgesehen sein. Die Halterungseinrichtung kann ferner integral mit der Antriebseinrichtung 10; 10' ausgebildet sein. Bei einer beweglichen Halterungseinrichtung wird die Lage der Komponenten derart korrigiert, dass diese stets in eine gewünschte Richtung angepasst an die Fortbewegung der Ablegeeinheit ausgerichtet sind. Beispielsweise kann dazu innerhalb des Gehäuses mit einem geringfügig geringeren Durchmesser ein Innengehäuse vorgesehen sein, welches relativ zu dem Gehäuse 13 rotierbar ist. Beispielsweise kann es dazu über mechanische oder magnetische Lager mit dem Gehäuse 13 gekoppelt sein. Eine solche Ausführung kommt insbesondere bei einem kugelförmigen oder zylinderförmigen Gehäuse 13 infrage.

Das Gehäuse 13 muss nicht notwendigerweise als Abrollfläche dienen. Gemäß einer weiteren Ausführungsform ist die Antriebseinrichtung als mit dem Gehäuse gekoppelte Antriebsrolle ausgebildet. Vorteilhaft stellt dies eine vergleichsweise einfach herzustellende Antriebseinrichtung dar, welche nicht in das Gehäuse integriert, sondern lediglich daran gekoppelt vorgesehen ist. Darüber hinaus kann eine derartige Antriebsrolle auch eine Stabilität der Ablegeeinheit im Stand oder bei einer Fortbewegung bereitstellen.

Gemäß einer Weiterbildung ist die Antriebseinrichtung 10; 10' als Ablegeeinrichtung zum definierten Ablegen des Fasermaterials auf einem Werkzeug 2 ausgebildet. Vorteilhaft übernimmt die Antriebseinrichtung 10; 10' somit mehrere Funktionen der Kraftübertragung auf die Lauffläche 6; 6' und des definierten Ablegens und/oder Kompaktierens des Fasermaterials. Die Ablegeeinrichtung kann auch eingesetzt werden, um bereits abgelegtes Fasermaterial zu kompaktieren. Die mittels der Ablegeeinrichtung zum definierten Ablegen und/oder Kompaktieren aufbringbaren Kräfte können über die Stärke des zum Fortbewegen und/oder Halten der Ablegeeinheit 3 auf der Lauffläche 6 vorgesehenen Magnetfeldes reguliert bzw. eingestellt werden.

Bei der Antriebseinrichtung muss es sich nicht ausschließlich um einen magnetischen Antrieb handeln. Denkbar wären stattdessen auch andere Antriebsarten.

Ferner sind anstatt rollender Ablegeeinheiten auch fliegende oder schwebende Ablegeeinheiten denkbar. Dies wäre insbesondere in einer schwerelosen Umgebung bzw. in der Schwerelosigkeit vorteilhaft. Die Ablegeeinheiten sind dann beispielsweise über Schubdüsen angetrieben. Insbesondere können die Ablegeeinheiten so um das formgebende Werkzeug kreisen. Mit dem Schubdüsenantrieb können dabei insbesondere auch Zentripetalkräfte zum Umkreisen bereitgestellt werden.

### Bezugszeichenliste

- 1; 1'; 1"; 1"': Vorrichtung
- 2; 2'; 2": Werkzeug
- 3, 3', 3": Ablegeeinheit
- 4: Fasermaterial
- 5; 5'; 5": Steuereinrichtung
- 6; 6': Lauffläche
- 7; 7'; 7": Kommunikationsmittel
- 8; 8': Hohlkörper
- 9: Innenseite
- 10: Antriebseinrichtung
- 11: Magnet
- 12: Magnet
- 13: Gehäuse
- 14: Empfangseinrichtung

## Patentansprüche

1. Vorrichtung (1; 1'; 1"; 1"') zum Herstellen eines Faserverbundbauteils, mit:
einem formgebenden Werkzeug (2; 2'; 2"); und
einer Mehrzahl an mechanisch voneinander unabhängigen Ablegeeinheiten (3, 3', 3"), welche jeweils zur Fortbewegung auf einer zugeordneten Lauffläche (6; 6') und zum Ablegen eines Fasermaterials (4) auf dem formgebenden Werkzeug (2; 2'; 2") ausgebildet sind, wobei die Ablegeeinheiten (3, 3', 3") jeweils eine Steuereinrichtung (5; 5'; 5") aufweisen, welche ausgelegt ist, die jeweilige Ablegeeinheit (3; 3'; 3") zum automatischen Zusammenwirken mit zumindest einer weiteren Ablegeeinheit (3; 3'; 3") zum gemeinsamen Ablegen einer vorbestimmten Faseranordnung anzusteuern,
**dadurch gekennzeichnet, dass** ein Hohlkörper (8) als Lauffläche (6; 6') vorgesehen ist, dessen Innenseite (9) die Lauffläche (6; 6') ausbildet, wobei das Werkzeug (2'; 2") zumindest abschnittsweise innerhalb des Hohlkörpers (8) derart anordenbar ist, dass es mittels sich auf der Lauffläche (6; 6') fortbewegender Ablegeeinheiten (3, 3', 3") mit dem Fasermaterial (4) umwickelbar oder umflechtbar ist, wobei die Lauffläche (6) ferromagnetisch ausgebildet ist und die Ablegeeinheiten (3, 3', 3") jeweils eine Antriebseinrichtung (10) mit mittels der Steuereinrichtung (5; 5'; 5") steuerbaren Magneten (11) zur magnetisch angetriebenen Fortbewegung auf der Lauffläche (6) aufweisen, und/oder die Lauffläche (6') steuerbare Magnete (12) enthält, insbesondere mittels der Steuereinrichtung (5; 5'; 5") einer Ablegeeinheit (3; 3'; 3") steuerbare Magnete (12), und die Ablegeeinheit (3; 3'; 3") eine damit zusammenwirkende Antriebseinrichtung (10') zur magnetisch angetriebenen Fortbewegung auf der Lauffläche (6') aufweist.

2. Vorrichtung nach Anspruch 1,
**dadurch gekennzeichnet,**
**dass** die Ablegeeinheiten (3; 3'; 3") jeweils zur autonomen Fortbewegung auf der zugeordneten Lauffläche (6; 6') ausgebildet sind.

3. Vorrichtung nach Anspruch 1 oder 2,
**dadurch gekennzeichnet,**
**dass** die Ablegeeinheiten (3; 3'; 3")jeweils Kommunikationsmittel (7; 7'; 7") aufweisen, welche zur Kommunikation der Ablegeeinheiten (3, 3', 3") untereinander zur Abstimmung des Ablegens der Faseranordnung, insbesondere des Musters oder der Aufteilung der Faseranordnung, ausgelegt sind.

4. Verfahren zum Herstellen eines Faserverbundbauteils, mit den folgenden Verfahrensschritten:
Bereitstellen eines formgebenden Werkzeugs (2; 2'; 2") und einer Mehrzahl von mechanisch voneinander unabhängigen Ablegeeinheiten (3, 3', 3"), welche zum Ablegen eines Fasermaterials (4) auf dem formgebenden Werkzeug (2; 2'; 2") ausgebildet sind; und
gemeinsames Ablegen des Fasermaterials (4) auf dem formgebenden Werkzeug (2; 2'; 2") mittels der Mehrzahl an mechanisch voneinander unabhängigen Ablegeeinheiten (3, 3', 3") in einer vorbestimmten Faseranordnung, wobei sich die Ablegeeinheiten (3, 3', 3") zum Ablegen des Fasermaterials (4) auf einer zugeordneten Lauffläche (6; 6') fortbewegen und jeweils eine Steuereinrichtung (5; 5'; 5") aufweisen, mittels welcher die jeweilige Ablegeeinheit (3; 3'; 3") zum automatischen Zusammenwirken mit zumindest einer weiteren Ablegeeinheit (3; 3'; 3") zum gemeinsamen Ablegen der vorbestimmten Faseranordnung angesteuert wird,
wobei sich die Ablegeeinheiten auf einer als Lauffläche (6) ausgebildeten Innenseite (9) eines Hohlkörpers (8) zum Ablegen des Fasermaterials (4) fortbewegen, wobei das Werkzeug (2') innerhalb des Hohlkörpers (8) derart angeordnet wird, dass die sich auf der Lauffläche (6) fortbewegende Ablegeeinheiten (3, 3', 3") das Werkzeug mit dem Fasermaterial (4) umwickeln oder umflechten.
wobei sich die Ablegeeinheiten (3, 3', 3") zum Ablegen des Fasermaterials (4) magnetisch angetrieben auf der Lauffläche (6; 6') fortbewegen.
wobei die Lauffläche (6) ferromagnetisch ausgebildet vorgesehen wird und die Ablegeeinheiten (3, 3', 3") jeweils eine Antriebseinrichtung (10) mit steuerbaren Magneten (11) zur magnetisch angetriebenen Fortbewegung auf der Lauffläche (6) aufweisen, wobei die Magnete (11) zur Fortbewegung der Ablegeeinheiten (3, 3', 3") auf der Lauffläche (6) jeweils mittels der jeder Ablegeeinheit (3; 3'; 3") eigenen Steuereinrichtung (5; 5'; 5") angesteuert werden, und/oder die Lauffläche (6') steuerbare Magnete (12) enthält und die Ablegeeinheiten (3, 3', 3") jeweils eine damit zusammenwirkende Antriebseinrichtung (10') zur magnetisch angetriebenen Fortbewegung auf der Lauffläche (6') aufweisen, wobei die Magnete (12) zur Fortbewegung der einzelnen Ablegeeinheiten (3; 3'; 3") auf der Lauffläche (6') mittels der jeder der Ablegeeinheiten eigenen Steuereinrichtung (5; 5'; 5") angesteuert werden.

5. Verfahren nach Anspruch 4,
**dadurch gekennzeichnet,**
**dass** die Ablegeeinheiten (3, 3', 3") Kommunikationsmittel (7; 7'; 7") aufweisen und untereinander zur Abstimmung des Ablegens der Faseranordnung, insbesondere des Musters oder der Aufteilung der Faseranordnung, kommunizieren.

6. Verfahren nach Anspruch 4 oder 5,
**dadurch gekennzeichnet,**
**dass** sich die Ablegeeinheiten (3, 3', 3") zum Ablegen des Fasermaterials (4) auf einer zugeordneten Lauffläche (6; 6') autonom fortbewegen.

## Claims

1. Device (1; 1'; 1"; 1''') for producing a fiber composite component, comprising: a shaping tool (2; 2'; 2"); and a plurality of mechanically independent depositing units (3, 3', 3"), each of which is designed for movement on an associated running surface (6; 6') and for depositing a fibrous material (4) on the shaping tool (2; 2'; 2"), wherein the depositing units (3, 3', 3") each comprise a control device (5; 5'; 5") which is designed to control the respective depositing unit (3; 3'; 3") for automatic cooperation with at least one further depositing unit (3; 3'; 3") for joint depositing of a predetermined fibre arrangement,
**characterized in that**
a hollow body (8) is provided as a running surface (6; 6'), the inner side (9) of which forms the running surface (6; 6'), wherein the tool (2'; 2") can be arranged at least in sections within the hollow body (8) in such a way,
**in that** it can be wrapped or braided with the fibre material (4) by means of depositing units (3, 3', 3") moving on the running surface (6; 6'),
wherein the running surface (6) is ferromagnetic and the depositing units (3, 3', 3") each have a drive device (10) with magnets (11) controllable by means of the control device (5; 5'; 5") for magnetically driven movement on the running surface (6), and/or the running surface (6') contains magnets (12) controllable, in particular by means of the control device (5); 5'; 5") of a depositing unit (3; 3'; 3"), and the depositing unit (3; 3'; 3") has a drive device (10') cooperating therewith for magnetically driven locomotion on the running surface (6').

2. Device according to claim 1,
**characterized in that**,
the depositing units (3; 3'; 3") are each designed for autonomous locomotion on the associated running surface (6; 6').

3. Device according to claim 1 or 2,
**characterized in that**,
the depositing units (3; 3'; 3") each have communication means (7; 7'; 7") which are designed for communication between the depositing units (3, 3', 3") to coordinate the depositing of the fibre arrangement, in particular of the pattern or the division of the fibre arrangement.

4. Method of manufacturing a fibre composite component, comprising the following process steps:
provision of a shaping tool (2; 2'; 2") and a plurality of mechanically independent depositing units (3, 3', 3"), which are designed for depositing a fiber material (4) on the forming tool (2; 2'; 2"); and
joint deposition of the fibrous material (4) on the shaping tool (2; 2'; 2") by means of the plurality of mechanically independent deposition units (3, 3', 3") in a predetermined fibre arrangement, wherein the deposition units (3, 3', 3") move on for deposition of the fibrous material (4) on an associated running surface (6; 6') and each having a control device (5; 5'; 5") by means of which the respective deposition unit (3; 3'; 3") is accessed to cooperate automatically with at least one further depositing unit (3; 3'; 3") for joint depositing of the predetermined fiber arrangement,
wherein the depositing units move on an inner side (9) of a hollow body (8) formed as a running surface (6) for depositing the fibre material (4), wherein the tool (2') is arranged inside the hollow body (8) in such a way that the depositing units (3, 3', 3") moving on the running surface (6) wrap or braid the tool with the fibre material (4),
wherein the depositing units (3, 3', 3") for depositing the fiber material (4) move on the running surface (6; 6') magnetically driven,
wherein the running surface (6) is provided in ferromagnetic form and the depositing units (3, 3', 3") each have a drive device (10) with controllable magnets (11) for magnetically driven locomotion on the running surface (6), wherein the magnets (11) for locomotion of the depositing units (3, 3', 3") on the running surface (6), each by means of the control device (5; 5'; 5") specific to each depositing unit (3; 3'; 3"), and/or the running surface (6') contains controllable magnets (12) and the depositing units (3, 3', 3") each have a drive device (10') cooperating therewith for magnetically driven locomotion on the running surface (6'), wherein the magnets (12) for locomotion of the individual depositing units (3; 3'; 3") on the running surface (6') being controlled by means of the control device (5; 5'; 5") specific to each of the depositing units.

5. Method according to claim 4,
**characterized in that**,
the depositing units (3, 3', 3") comprise communication means (7; 7'; 7") and communicate with each other for coordinating the depositing of the fiber arrangement, in particular the pattern or the division of the fiber arrangement.

6. Method according to claim 4 or 5,
**characterized in that**,
the depositing units (3, 3', 3") for depositing the fiber material (4) move autonomously on an assigned running surface (6; 6').

## Revendications

1. Dispositif (1 ; 1' ; 1" ; 1''') pour la production d'un composant composite en fibres, comprenant : un outil de façonnage (2 ; 2' ; 2") ; et
une pluralité d'unités de dépôt mécaniquement indépendantes (3, 3', 3"), dont chacune est conçue pour se déplacer sur une surface de roulement associée (6 ; 6') et pour déposer un matériau fibreux (4) sur l'outil de formage (2 ; 2' ; 2"), les unités de dépôt (3, 3', 3") comprenant chacune un dispositif de commande (5 ; 5' ; 5") qui est conçu pour commander l'unité de dépôt respective (3 ; 3' ; 3") pour une coopération automatique avec au moins une autre unité de dépôt (3 ; 3' ; 3") pour le dépôt commun d'un arrangement de fibres prédéterminé,
**caractérisé en ce que**
un corps creux (8) est prévu comme surface de roulement (6 ; 6'), dont la face intérieure (9) forme la surface de roulement (6 ; 6'), l'outil (2' ; 2") pouvant être disposé au moins par sections à l'intérieur du corps creux (8) de cette manière, **en ce qu'**il peut être enveloppé ou tressé avec la matière fibreuse (4) au moyen d'unités de pose (3, 3', 3") se déplaçant sur le plan de roulement (6 ; 6'), dans lequel la surface de roulement (6) est ferromagnétique et les unités de dépôt (3, 3', 3") présentent chacune un dispositif d'entraînement (10) avec des aimants (11) pouvant être commandés au moyen du dispositif de commande (5 ; 5' ; 5") pour un mouvement entraîné magnétiquement sur la surface de roulement (6), et/ou la surface de roulement (6') contient des aimants (12) pouvant être commandés, en particulier au moyen du dispositif de commande (5) ; 5' ; 5") d'une unité de dépôt (3 ; 3' ; 3"), et l'unité de dépôt (3 ; 3' ; 3") comporte un dispositif d'entraînement (10') coopérant avec celle-ci pour la locomotion à entraînement magnétique sur la surface de roulement (6').

2. Dispositif selon la revendication 1,
**caractérisé en ce que**,
les unités de dépôt (3 ; 3' ; 3") sont chacune conçues pour un mouvement autonome sur la surface de roulement associée (6 ; 6').

3. Dispositif selon la revendication 1 ou 2,
**caractérisé en ce que**,
les unités de dépôt (3 ; 3' ; 3") disposent chacune de moyens de communication (7 ; 7' ; 7") qui sont conçus pour la communication entre les unités de dépôt (3, 3', 3") pour coordonner le dépôt de l'arrangement de fibres, en particulier du motif ou de la division de la disposition des fibres.

4. Méthode de fabrication d'un composant composite en fibres, comprenant les étapes de procédé suivantes :
fournir un outil de mise en forme (2 ; 2' ; 2") et une pluralité d'unités de dépôt mécaniquement indépendantes (3, 3', 3"), qui sont conçues pour déposer un matériau fibreux (4) sur l'outil de formage (2 ; 2' ; 2") et dépôt commun de la matière fibreuse (4) sur l'outil de formage (2 ; 2' ; 2") au moyen de la pluralité d'unités de dépôt (3, 3', 3") mécaniquement indépendantes dans une disposition de fibres prédéterminée, les unités de dépôt (3, 3', 3") avançant pour le dépôt de la matière fibreuse (4) sur une surface de roulement (6 ; 6') associée et présentant chacune un dispositif de commande (5 ; 5' ; 5") au moyen duquel l'unité de dépôt (3 ; 3' ; 3") respective est adaptée pour coopérer automatiquement avec au moins une autre unité de dépôt (3 ; 3' ; 3") est contrôlée pour le dépôt commun de la disposition de fibres prédéterminée,
dans lequel les unités de dépôt se déplacent sur une face intérieure (9) d'un corps creux (8), laquelle face intérieure (9) est formée comme une surface de roulement (6), pour déposer le matériau fibreux (4), dans lequel l'outil (2') est disposé à l'intérieur du corps creux (8) de telle manière que les unités de dépôt (3, 3', 3") se déplaçant sur la surface de roulement (6) enveloppent ou tressent l'outil avec le matériau fibreux (4),
où les unités de dépôt (3, 3', 3") pour le dépôt de la matière fibreuse (4) entraînée magnétiquement sur le plan de roulement (6 ; 6'),
dans lequel la surface de roulement (6) est fournie sous forme ferromagnétique et les unités de dépôt (3, 3', 3") disposent chacune d'un dispositif d'entraînement (10) avec des aimants contrôlables (11) pour la locomotion à entraînement magnétique sur la surface de roulement (6), les aimants (11) pour la locomotion de la
déposer des unités (3, 3', 3") sur le plan de roulement (6) au moyen du dispositif de contrôle (5 ; 5') propre à chaque unité de dépôt (3 ; 3' ; 3") ; 5"), et/ou la surface de roulement (6') contient des aimants (12) pouvant être commandés, et les unités de dépôt (3, 3', 3") présentent chacune un dispositif d'entraînement (10') coopérant avec elles pour la locomotion à entraînement magnétique sur la surface de roulement (6'), les aimants (12) étant commandés pour la locomotion des différentes unités de dépôt (3 ; 3' ; 3") sur la surface de roulement (6') au moyen du dispositif de commande (5 ; 5' ; 5") spécifique à chacune des unités de dépôt.

5. Méthode selon la revendication 4,
**caractérisé en ce que**,
les unités de dépôt (3, 3', 3") comprennent des moyens de communication (7 ; 7' ; 7") et communiquent entre elles pour coordonner le dépôt de l'arrangement de fibres, en particulier le motif ou la division de l'arrangement de fibres.

6. Méthode selon la revendication 4 ou 5,
**caractérisé en ce que**,
les unités de dépôt (3, 3', 3") pour le dépôt de la matière fibreuse (4) se déplacer de manière autonome sur un plan de roulement associé (6 ; 6').
